# DEMANDE DE BREVET EUROPEEN

(11) **EP 3 657 415 A1**
(43) Date de publication de la demande: **27.05.2020**
(21) Numéro de dépôt: 19210255.6
(22) Date de dépôt: 20.11.2019
(51) Int. Cl.: G06Q 10/08, G01S 17/58, G01V 8/22

(54) **SYSTÈME DE CONTRÔLE DE CHARGEMENT ET DE DÉCHARGEMENT DE PALETTES**

(30) Priorité: 20.11.2018 FR 1871620
(71) Demandeur: Versa S.A.S., 29290 Saint-Renan (FR)
(72) Inventeur: IVANOFF, Jacques, 29840 LANILDUT (FR)
(74) Mandataire: Ipside

(57) **Abrégé**

L'invention concerne un système de contrôle de chargement et de déchargement de palettes comportant une borne (20) positionnée à proximité du point de passage des palettes, chaque palette comporte un code barre. La borne (20) comporte :
- un dispositif de prise de vue (21), configuré pour la prise de photo au moment du passage d'une palette devant ladite borne (20),
- un flash (22) relié au dispositif de prise de vue (21) se déclenchant lors de la prise de photo ;
- une unité de commande, comportant un microcontrôleur pilotant le système et ladite base de donnée, une unité de traitement de la photo pour identifier le code barre de la palette prise en photo, une unité de déclenchement de la prise de photo en fonction d'au moins une première cellule de détection de palettes indiquant un passage devant la borne.

## Description

### Domaine technique de l'invention

La présente invention concerne un système de contrôle de chargement et de déchargement de palettes. Elle s'applique, en particulier, à toutes les entreprises, organismes publics ou privés utilisant les palettes comme unité de manutention ou de conditionnement ou tout autre contenant manipulable de la même façon qu'une palette (manipulation par transpalette).

Le terme « palette » utilisé dans ce document recouvre tout type de contenant pouvant être manipulé par un engin de manutention à fourche (transpalette manuel ou électrique, chariot élévateur, transgerbeur etc..), il peut s'agir de palettes bois, palettes plastique, palette métal, caisse palette (bois, plastique, carton, grillagée)...

### Technique antérieure

Un des buts de l'invention est de tracer automatiquement les mouvements de palettes pendant la phase de chargement et déchargement.

Une technique antérieure consiste à utiliser un lecteur de code barre à faisceau laser. Les inconvénients de cette technique sont que la zone de lecture doit être inférieure à 1 mètre de hauteur, la lecture de code barre n'est pas fiable (de l'ordre de 30 % de code barre non lus) et il n'y a pas de preuve du chargement ou déchargement.

Une autre technique consiste à utiliser un terminal portable avec lecteur code barre type PDA (pour Personal Digital Assistant, en terminologie anglophone ou assistant numérique personnel en français, aussi appelé organiseur). Les inconvénients de cette technique est qu'on ne garantit pas que l'identification de la palette soit faite avant le chargement (la palette peut être chargée et non identifiée), il est nécessaire de faire une pause pour identifier la palette, et aussi il n'y a pas de preuve du chargement ou déchargement.

### Présentation de l'invention

La présente invention vise à remédier à ces inconvénients avec une approche totalement novatrice.

A cet effet, la présente invention vise un système de contrôle de chargement et de déchargement de palettes comportant une borne positionnée à proximité du point de passage des palettes, chaque palette comporte un code barre, ledit système étant remarquable en ce que la borne comporte :
- un dispositif de prise de vue, de type caméra, configuré pour la prise de photo au moment du passage d'une palette devant ladite borne, ladite borne extrait et décode le code barre d'identification de la palette avant d'envoyer ladite photo à une base de donnée ;
- un flash relié au dispositif de prise de vue se déclenchant lors de la prise de photo ;
- une unité de commande, comportant un microcontrôleur pilotant le système et ladite base de donnée, une unité de traitement de la photo pour identifier le code barre de la palette prise en photo, une unité de déclenchement de la prise de photo en fonction d'au moins :
- une première cellule de détection de palettes, la première cellule de détection comportant un premier capteur à diffusion et un deuxième capteur à diffusion indiquant un passage devant la borne,
- une deuxième cellule de détection, la deuxième cellule de détection ayant un premier capteur à réflexion et un deuxième capteur à réflexion, coopérant avec un réflecteur positionné sur un engin de manutention de la palette indiquant la présence d'une palette à la borne.

Les capteurs à diffusion sont installés dans une seule borne, l'émetteur et le récepteur étant tous deux dans le même logement. Les capteurs à diffusion utilisent la réflexion de l'objet cible au sein de la plage de détection prédéterminée. L'émetteur envoie un faisceau de lumière continu. Une fois qu'il touche la cible, il est diffusé dans tous les sens. Une partie de cette lumière revient et est reconnue par le récepteur qui envoie ensuite un signal électrique à la sortie. Dans une variante, il est utilisé des capteurs à diffusion avec suppression du fond qui font appel à une distance de détection ajustable. Dans ce cas, on ignore les objets au fond réfléchissant pour garantir que seuls les objets inclus dans la distance de détection sont détectés. L'information est ensuite traitée par l'unité de commande.

Grâce à ces dispositions, le système permet de tracer automatiquement les mouvements de palettes ou équivalents :
- Identification automatique des palettes entrant dans un entrepôt ou tout site utilisant des produits conditionnés en palettes en particulier lors du déchargement des camions.
- Identification automatique des palettes sortant d'un entrepôt ou de tout site utilisant des produits conditionnés en palettes en particulier lors du chargement des camions.
- Identification automatique des palettes transitant à l'intérieur d'un entrepôt ou de tout site utilisant des produits conditionnés en palettes (captation automatique de mouvement de transfert d'un stock à l'autre).

Ainsi, le système est fiable dans l'identification de toute palette passant à proximité. On entend par proximité, une distance inférieure à 5m.

L'dentification automatique consiste à effectuer les opérations suivantes :
- Lire automatiquement le code barre d'identification de la palette sans arrêt de l'engin manipulant la palette (transpalette, chariot de manutention etc...), il y a une lecture en continu.
- Conserver une photo (et la date) de la palette lors de son passage devant le système.

Le système permet d'identifier avec certitude et preuve par la photo les mouvements de palettes ou autres contenants effectués dans le cadre d'opérations précises (chargement/déchargement d'un camion, transferts de stock etc...).

Les capteurs à réflexion sont installés dans une borne et l'émetteur et le récepteur se trouvent dans le même logement. Il suffit donc tout simplement de positionner le réflecteur face au capteur. Dans le cas présent, le réflecteur est positionné sur l'engin de manutention. Le principe est qu'une détection a lieu lorsque le faisceau lumineux entre l'émetteur et le récepteur est reçu. Le réflecteur renvoie le faisceau lumineux au capteur lorsqu'un objet est présent ce qui fait que permet de recevoir le faisceau et provoque l'envoi d'un signal électrique par le capteur à la sortie. L'information est ensuite traitée par l'unité de commande.

L'invention est avantageusement mise en œuvre selon les modes de réalisation et les variantes exposées ci-après, lesquelles sont à considérer individuellement ou selon toute combinaison techniquement opérante.

Dans un mode de réalisation, pour le chargement l'unité de déclenchement de la prise de photo prend la photo si le premier capteur à diffusion indique la présence d'un passage devant la borne à l'unité de commande, puis le deuxième capteur à diffusion indique un passage devant la borne à l'unité de commande.

Dans un mode de réalisation, pour le déchargement l'unité de déclenchement de la prise de photo prend la photo si le deuxième capteur à diffusion indique un passage devant la borne, puis le deuxième capteur à réflexion indique la présence d'une palette, puis le premier capteur à diffusion indique un passage devant la borne, puis le premier capteur à réflexion indique la présence d'une palette.

Dans un mode de réalisation, il comporte un écran d'information du système.

Par exemple, l'écran permet de montrer la photo prise lors du chargement et du déchargement de la palette.

Dans un mode de réalisation, de chaque côté du point de passage des palettes se trouve une borne.

Dans un mode de réalisation, au-dessus du point de passage des palettes se trouve un premier capteur de profondeur adapté à mesurer la distance en hauteur de la palette entre le capteur et ladite palette.

Dans un mode de réalisation, de part et d'autre du point de passage des palettes se trouve un deuxième capteur de profondeur et un troisième capteur de profondeur, le deuxième capteur de profondeur et le troisième capteur de profondeur étant adaptés à mesurer la distance en longueur et largeur de la palette entre le capteur et ladite palette.

Grâce à ces dispositions, le système permet de déterminer automatiquement le volume en air de la palette (dimensions extérieures maximum : longueur, largeur, hauteur), sans arrêt de l'engin manipulant la palette.

Lors de la mesure volumétrique, il est nécessaire d'avoir l'information du sens de l'engin manipulant la palette pour enlever le volume de l'engin de manutention et la personne qui manipule l'engin. Ainsi, les différents capteurs de mesure vont mesurer l'ensemble et vont pouvoir reconstituer en trois dimensions le volume de l'ensemble.

L'unité de commande va réaliser un traitement l'information issue des différents capteurs pour soustraire la personne manipulant l'engin et l'engin de manutention pour qu'il reste que le volume de la palette.

Le traitement d'information issu des capteurs est possible en connaissant le sens et la direction de la palette, ce qui facilite le calcul du volume pour permettre d'identifier de façon fiable l'engin de manutention et la personne qui le manipule.

### Brève description des figures

D'autres avantages, buts et caractéristiques de la présente invention ressortent de la description qui suit faite, dans un but explicatif et nullement limitatif, en regard des dessins annexés, dans lesquels :
[Fig. 1] la figure 1 représente un schéma d'une borne du système de contrôle de chargement et de déchargement d'une palette objet de la présente invention ;
[Fig. 2] la figure 2 représente un schéma du passage de la palette devant une borne du système de contrôle de chargement et de déchargement d'une palette objet de la présente invention ;
[Fig. 3] la figure 3 représente une étape du chargement et plus particulièrement l'arrivée de la palette devant la zone de d'identification ;
[Fig. 4] la figure 4 représente une étape du chargement et plus particulièrement représente l'arrivée de la palette devant la zone de d'identification et détection par la deuxième cellule ;
[Fig. 5] la figure 5 représente une étape du chargement et plus particulièrement le déclenchement de la photo centré sur la palette ;
[Fig. 6] la figure 6 représente une étape du chargement et plus particulièrement le chargement de la palette dans le camion ;
[Fig. 7] la figure 7 représente une étape du chargement et plus particulièrement la sortie de l'engin de manutention du camion ;
[Fig. 8] la figure 8 représente une étape du déchargement et plus particulièrement l'arrivée devant la zone d'identification et la détection de l'opérateur ;
[Fig. 9] la figure 9 représente une étape du déchargement et plus particulièrement la détection de l'engin de manutention ;
[Fig. 10] la figure 10 représente une étape du déchargement et plus particulièrement la détection de l'engin de manutention par le premier capteur à réflexion ;
[Fig. 11] la figure 11 représente une étape du déchargement et plus particulièrement la prise de photo ;
[Fig. 12] la figure 12 représente une vue en perspective d'un chargement sur une palette avec un capteur de profondeur situé au-dessus d'une palette ;
[Fig. 13] la figure 13 représente une vue de face avec deux bornes du système et un portique ayant trois capteurs de profondeur ;
[Fig. 14] la figure 14 représente une vue en perspective selon un angle de vue du volume de la palette ;
[Fig. 15] la figure 15 représente une vue en perspective selon un autre angle de vue du volume de la palette.

### Description des modes de réalisation

### Définitions :

Cellules de détection : système optoélectroniques permettant la détection d'objet soit par réflexion directe (lumière émise par la cellule réfléchie directement par l'objet à détecter) ou par utilisation de réflecteur spécifique (lumière émise par la cellule renvoyée exclusivement par un réflecteur spécifique).
Entrepôt, stock : emplacement physique où sont entreposés des produits (en particulier les palettes ou équivalents)
WMS : pour Warehouse Management System, marque déposée, logiciel de gestion d'entrepôt
TMS : pour Transport Management System, marque déposée, logiciel d'organisation des transports y compris la gestion d'un site de chargement ou déchargement de camions (planning d'affectation des quais du flux de camions passant sur le site).
ERP : Enterprise Resource Planning, marque déposée, logiciel de gestion intégré pour entreprise, peut intégrer un WMS ou un TMS.
Quai de chargement ou déchargement : emplacement où se positionnent les camions pour charger ou décharger des produits, les quais sont à la même hauteur que les remorques des camions, une plateforme mobile permet d'ajuster les quelques centimètres d'écart entre les remorques et le sol de l'entrepôt, les engins de manutention peuvent alors entrer et sortir naturellement du camion.
Automate ou micro-automate programmable ou unité de commande : dispositif programmable en temps réel industriel permettant la connexion d'équipements extérieur tels des cellules de détection, des voyants.
Chariot : engin de manutention permettant la manipulation de « palettes »

### Exemples de réalisation

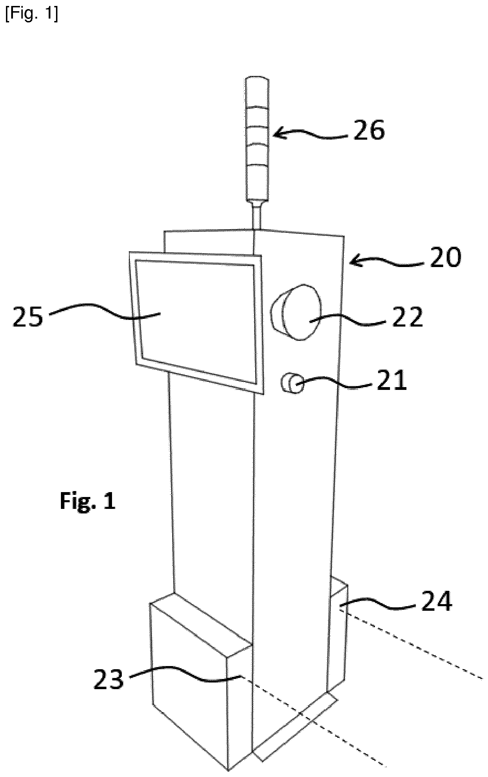

La figure 1 représente une borne 20 du système de contrôle de chargement et de déchargement d'une palette. La borne 20 représentée à une hauteur d'environ 1,50 m et est placée à proximité du point de passage des palettes (quai de chargement /déchargement d'un entrepôt, portes d'entrées/sorties de stock).

Le système intègre principalement une caméra (dispositif de prise de vue, 21), un flash 22, un ordinateur ou microcontrôleur ou automate ou encore unité de commande, des cellules de détection des palettes. La première cellule de détection de palettes comporte un premier capteur à diffusion 23 et la deuxième cellule de détection de palettes comporte un deuxième capteur à diffusion 24. Au niveau de la borne 20 se trouve un écran 25 permettant l'affichage d'information. Au-dessus de la borne 20 se trouve un témoin de passage 26 lumineux, (des voyants)

Le système offre les fonctionnalités suivantes :
- Prise de de photo au moment précis du passage de la palette.
- Récupération du code barre d'identification de la palette par analyse d'image.
- Echange informatique avec le logiciel de gestion d'entrepôt (ERP, WMS, TMS) du client pour validation du mouvement de la palette.
- Archivage de la photo pour preuve d'expédition/réception.
- Discrimination chargement ou déchargement pour éviter les déclenchements intempestifs de photos (passage à vide, passage d'un opérateur seul).

Un des problèmes résolus par l'invention consiste à garantir le déclenchement d'une photo au moment exact de passage de la palette devant la borne 20.

### Mode chargement de palette (marche avant du système de manutention) :

Pour ce cas de figure, l'idée originale consiste à utiliser deux cellules de détection palette (à réflexion directe) permettant de déterminer le sens de passage (une cellule puis l'autre), de mesurer le temps entre les deux détections, calculer la vitesse du chariot et déclencher la photo au moment précis du passage de la palette.

Lors de la sortie du chariot vide (sans la palette), les cellules détectent l'ordre de passage et inhibent le déclenchement de photo.

Les cellules sont positionnées à environ 30 cm du sol de façon à pouvoir détecter les palettes les plus basses.

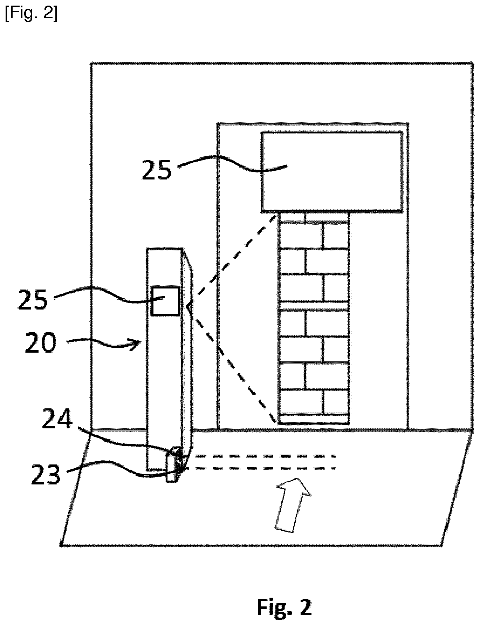

**La** **figure 2** représente un schéma du passage de la palette devant une borne 20 du système de contrôle de chargement et de déchargement d'une palette.

La mise en oeuvre du système se traduit par l'installation de bornes 20 au niveau de quai de chargement de camions, il s'agit également de l'installation de bornes 20 au niveau de portes d'accès à des stocks (exemple : produits sortant de production sur palette et stockés ensuite dans un entrepôt intégré au site, le transfert se fait par chariot élévateur).

Cette figure montre une seule borne 20 qui est installée à chaque point de contrôle (nécessite la présence de l'étiquette palette toujours du même côté). Un écran 25 se trouve sur la borne 20 et un autre qui est positionné au-dessus du quai de chargement ou de déchargement. L'écran 25 de grande taille est déporté en hauteur et permet de faire un retour à l'opérateur.

Les deux traits en pointillés représentent le cône de vue du dispositif de prise de vue 21. La flèche indique le sens de passage de la palette.

En cas d'incertitude de la position de l'étiquette (code barre) sur la palette, il est positionné deux bornes 20 installées de chaque côté du point de contrôle (une borne « maître » + une borne « esclave »).

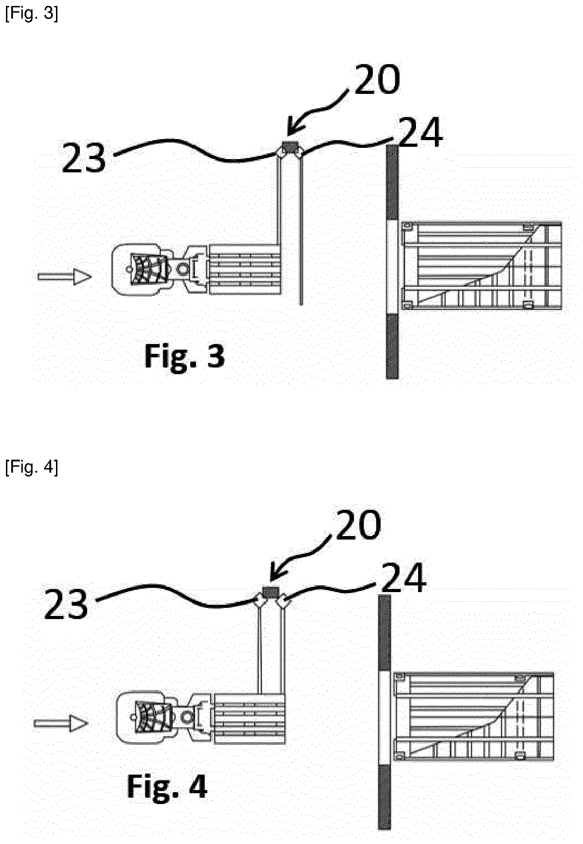

**Les** **figures 3 à 7** représentent des schémas du passage de la palette devant une borne 20 du système de contrôle lors du chargement d'une palette. Sur ces figures, il est représenté la borne 20, un premier capteur de diffusion 23 et un deuxième capteur de diffusion 24.

**La** **figure 3** représente l'arrivée de la palette devant la zone de d'identification.

La détection est effectuée par la première cellule qui comporte le premier capteur de diffusion 23. Celui-ci est coupé par le passage de la palette.

**La** **figure 4** représente l'arrivée de la palette devant la zone de d'identification et détection par la deuxième cellule.

La détection est effectuée par la première cellule de détection qui comporte le premier capteur de diffusion 23 et le deuxième capteur de diffusion 24. La détection est alors effectuée par le premier capteur de diffusion 23 qui est coupé par un passage devant la borne, puis le deuxième capteur à diffusion 24 qui est également coupé par un passage devant la borne.

L'unité de commande traite l'information en directe et calcul la vitesse de déplacement de la palette. L'information de la vitesse est alors traitée par l'unité de déclenchement de la prise de photo pour déclencher la photo au bon moment. La photo est prise si le premier capteur à diffusion 23 indique un passage devant la borne 20 à l'unité de commande puis le deuxième capteur à diffusion 24 indique un passage devant la borne 20 à l'unité de commande. Dans une autre variante, la photo est prise en fonction de la vitesse d'avance de la palette et si le premier capteur à diffusion 23 indique un passage devant la borne 20 à l'unité de commande puis le deuxième capteur à diffusion 24 indique un passage devant la borne 20 à l'unité de commande.

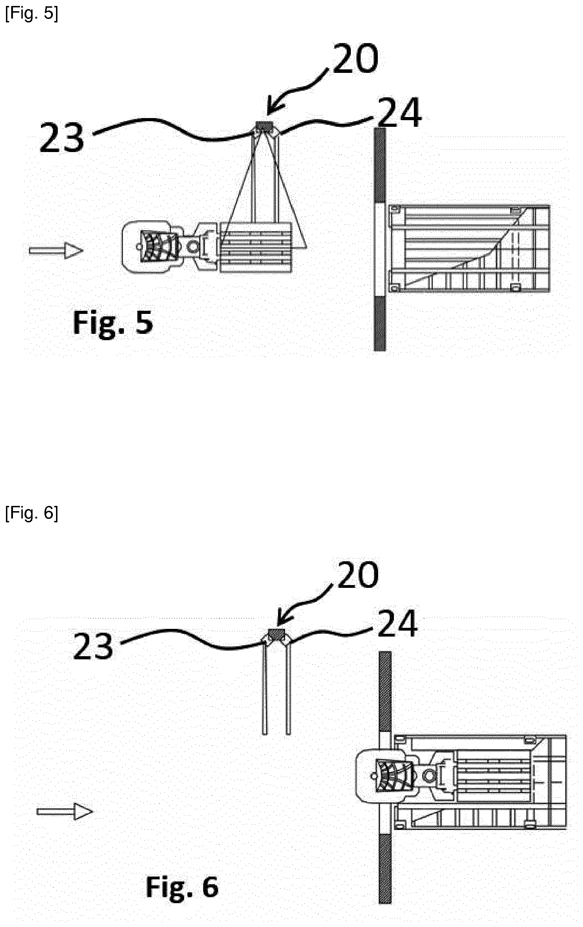

**La** **figure 5** représente le déclenchement de la photo centré sur la palette.

Il est visible un cône qui représente la prise de vue par le dispositif de prise de vue 21. L'unité de déclenchement de la prise de photo déclenche la prise de photo lorsque la palette se trouve au milieu du cône représenté sur la figure. Le milieu est connu par la vitesse de déplacement de la palette. Les dimensions de la palette sont connues, le prise de photo est déclenchée légèrement (en fonction de la vitesse) après que les sorties du premier capteur à diffusion 23 et du deuxième capteur à diffusion 24 indique un passage devant la borne 20. L'ordre de coupure du premier capteur à diffusion 23 puis du deuxième capteur à diffusion 24 indique bien le chargement et donc la prise de photo pour le chargement.

La **figure 6** représente le chargement de la palette dans le camion. Sur cette figure la palette est chargée dans le camion. Le premier capteur de diffusion 23 et le deuxième capteur de diffusion 24 n'étant pas coupé par la palette ou par son engin de manutention.

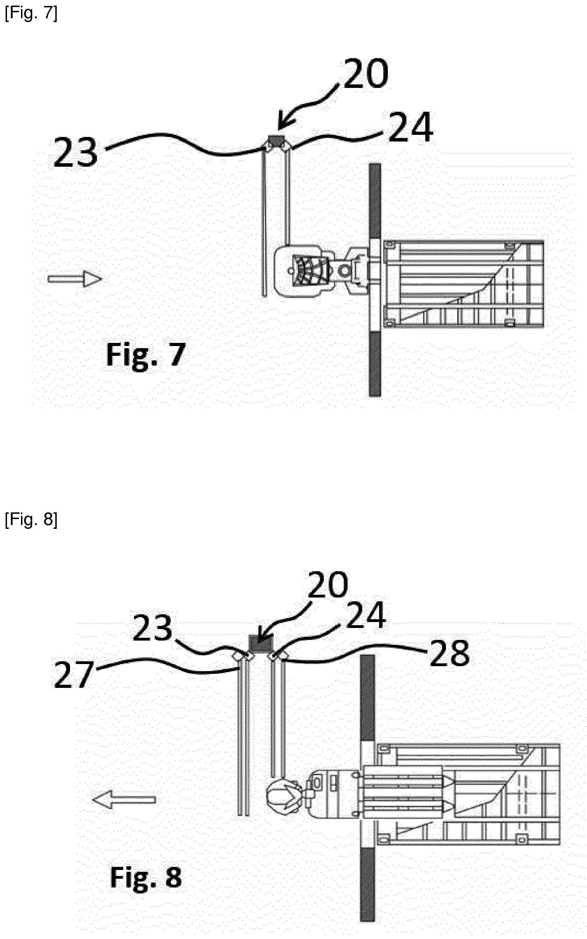

La **figure 7** représente la sortie du chariot (engin de manutention) du camion.

Sur cette figure la palette est stockée dans le camion et on voit l'engin de manutention sortir du camion. La détection de l'engin de manutention est effectuée de la manière suivante : détection par le deuxième capteur de diffusion 24 puis par le premier capteur de diffusion 23. Dans cet ordre de détection il n'y a pas de déclenchement photo. Autrement dit, lorsque le deuxième capteur à diffusion 24 est coupé puis le premier capteur à diffusion 23, l'unité de déclenchement de prise de photo ne prend pas de photo.

### Mode déchargement de palette (marche arrière du système de manutention) :

Pour ce cas de figure, il est détecté en premier le système de manutention et certainement l'opérateur s'il s'agit d'un transpalette électrique ou manuel.

L'idée originale consiste à utiliser deux cellules de détection supplémentaires sensibles uniquement à des réflecteurs fixés sur l'engin de manutention et calculer le point de déclenchement de la photo à l'aide de ces deux cellules.

**Les** **figures 8 à 11** représentent des schémas du passage de la palette devant une borne 20 du système de contrôle lors du déchargement d'une palette. Sur ces figures, il est représenté la borne 20, un premier capteur de diffusion 23, un deuxième capteur de diffusion 24, premier capteur à réflexion 27 et deuxième capteur à réflexion 28.

La **figure 8** représente l'arrivée devant la zone d'identification et la détection de l'opérateur. Sur cette figure la palette est déchargée dans le camion. Le deuxième capteur à diffusion 24 est coupée ainsi que le deuxième capteur à réflexion 28. Toutefois, à cette étape le deuxième capteur à réflexion 28 ne renvoie pas l'information de la réflexion puisque le réflecteur est sur l'engin de manutention. L'opérateur passe devant les cellules de détection sans les déclencher.

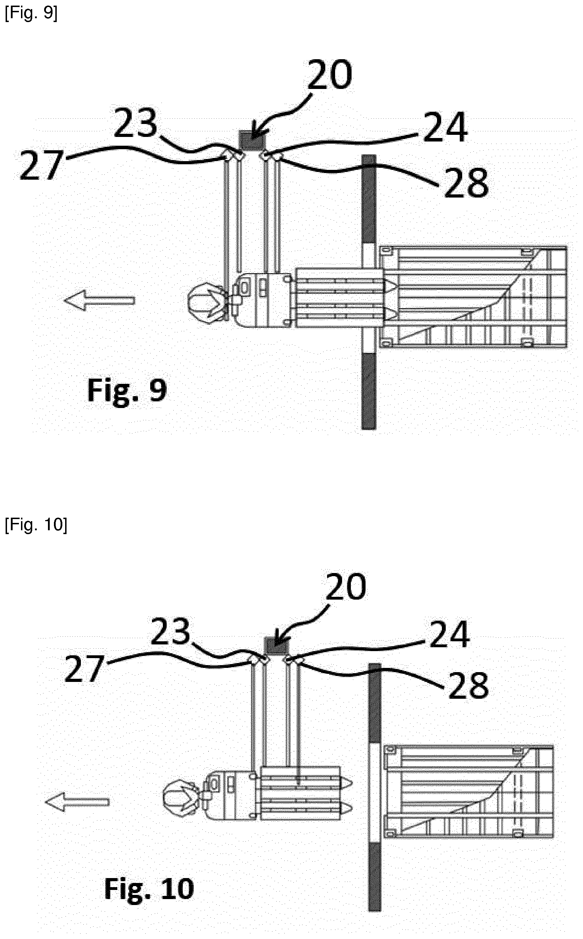

La **figure 9** représente la détection de l'engin de manutention. L'engin de manutention est détecté par le deuxième capteur à réflexion 28. En l'espèce, le réflecteur positionné sur engin de manutention donne l'information du passage devant la borne 20. Le premier capteur à réflexion 27 n'est pas coupé, il n'y a pas encore de détection de l'engin de manutention. Le premier capteur à diffusion 23 est coupé par l'engin de manutention. Le système enregistre l'ordre de déclenchement des capteurs de sorte à pouvoir identifier le chargement du déchargement.

La **figure 10** représente la détection de l'engin de manutention par le premier capteur à réflexion 27. L'engin de manutention est détecté par le premier capteur à réflexion 27 coopérant avec le réflecteur positionné sur l'engin de manutention.

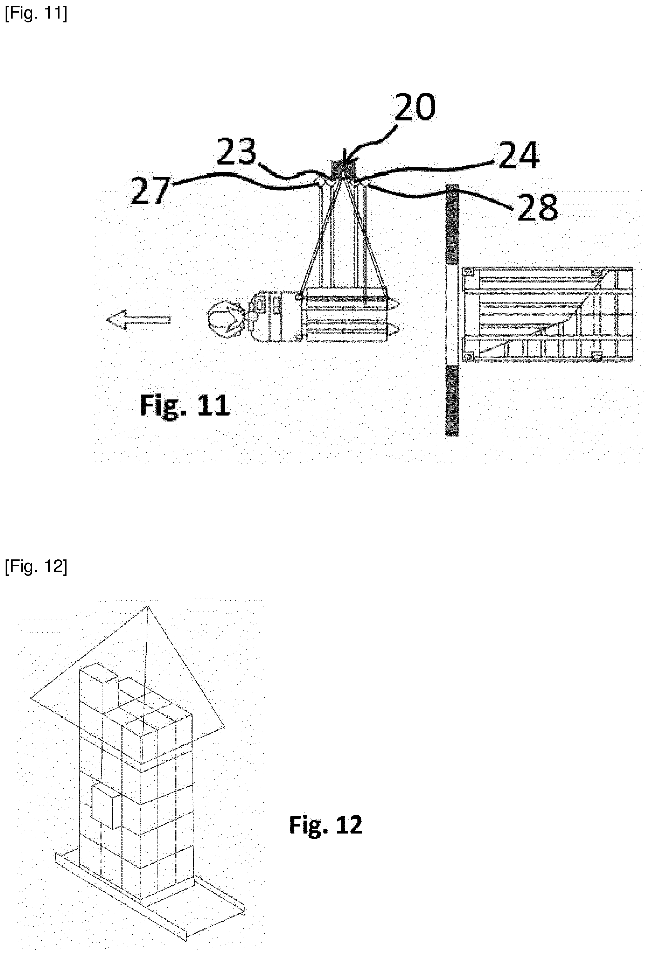

La **figure 11** représente la prise de photo. La photo est prise uniquement s'il y a présence de la palette. L'unité de déclenchement de la prise de photo permet la prise de photo si le deuxième capteur à diffusion 24 est coupé ou indique le passage devant la borne 20, puis le deuxième capteur à réflexion 28 est coupé ou indique la présence d'une palette, puis le premier capteur à diffusion 23 est coupé ou indique la présence devant la borne 20 et enfin si le deuxième capteur à réflexion 28 indique la présence d'une palette. Le principe d'utilisation de quatre cellules de détection permet de détecter automatiquement s'il s'agit d'un chargement ou d'un déchargement et l'engin de manutention vide n'est jamais pris en photo.

### Mesure de volume lors du passage de la palette

Le système permet de déclencher un évènement lors du passage précis de la palette, par exemple lors du chargement ou du déchargement d'un camion.

Le système comprend pour la mesure du volume des capteurs de profondeur. Ces capteurs renvoient une matrice de points contenant chacun la distance entre le capteur et l'objet potentiel.

La **figure 12** permet de voir la mesure avec un capteur de profondeur situé au-dessus d'une palette.

Cette vue de dessus permet de récupérer la hauteur maximum de la palette mais ne permet pas de récupérer les informations de longueur et largeur maximum.

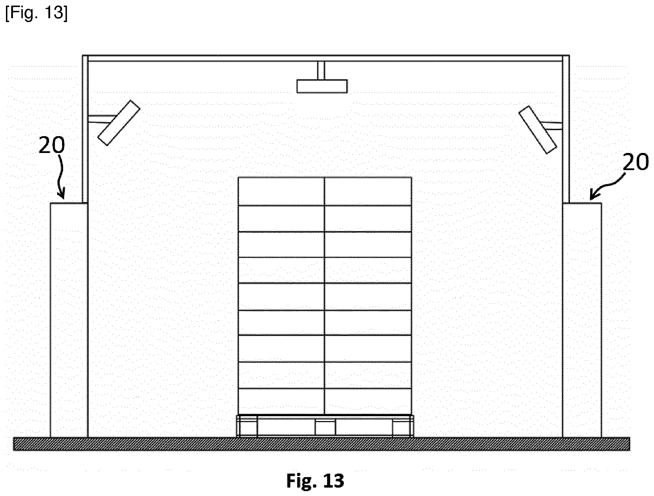

La **figure 13** permet de voir avec un capteur de profondeur situé au-dessus d'une palette et deux autres sur le côté afin d'obtenir une mesure exhaustive des dimensions de la palette. Les capteurs de profondeur étant positionnés sur un portique au-dessus du passage des palettes. Ce système permet de prendre une photo et de mesurer le volume de la palette.

Afin d'effectuer une mesure exhaustive en récupérant la longueur et la largeur, il y a deux capteurs de profondeurs supplémentaires positionnés de chaque côté légèrement au-dessus de chaque borne 20. Un microcontrôleur permet à l'aide d'un algorithme de traitement des mesures de reconstruire une vision en trois dimensions des trois mesures effectuées de la palette et d'en extraire les dimensions extérieures maximum.

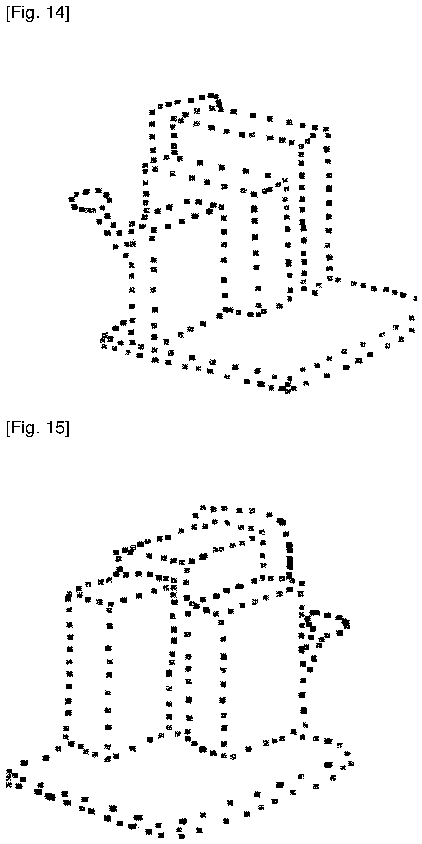

Les **figures 14 et 15** montrent une visualisation en trois dimensions sous deux angles différents. Ces figures montrent un nuage de point représentant la mesure effectuée par les capteurs de profondeurs. A l'aide de l'unité de commande, le volume est déduit de ces mesures. Les trois dimensions hauteur, largeur et longueur étant extraite de ces mesures de profondeur.

Dans un exemple, il existe plusieurs paquets rectangulaires. Pour chacun des paquets il est déduit les dimensions et le volume est ensuite calculé en additionnant les différents paquets.

Dans l'exemple représenté, on ne distingue pas les paquets un à un, le calcul du volume n'est pas la résultante du volume de chaque paquet mais une mesure globale.

### LISTE DES SIGNES DE RÉFÉRENCE

**[Tableaux 1]**

| Références | Désignations |
|---|---|
| 20 | borne |
| 21 | dispositif de prise de vue |
| 22 | flash |
| 23 | premier capteur à diffusion |
| 24 | deuxième capteur à diffusion |
| 25 | écran |
| 26 | témoin de passage |
| 27 | premier capteur à réflexion |
| 28 | deuxième capteur à réflexion |

## Revendications

1. Système de contrôle de chargement et de déchargement de palettes comportant une borne (20) positionnée à proximité du point de passage des palettes, chaque palette comporte un code barre, ledit système étant **caractérisé en ce que** la borne (20) comporte :
- un dispositif de prise de vue (21), de type caméra, configuré pour la prise de photo au moment du passage d'une palette devant ladite borne (20), ladite borne (20) extrait et décode le code barre d'identification de la palette avant d'envoyer ladite photo à une base de donnée ;
- un flash (22) relié au dispositif de prise de vue (21) se déclenchant lors de la prise de photo ;
- une unité de commande, comportant un microcontrôleur pilotant le système et ladite base de donnée, une unité de traitement de la photo pour identifier le code barre de la palette prise en photo, une unité de déclenchement de la prise de photo en fonction d'au moins :
- une première cellule de détection de palettes, la première cellule de détection comportant un premier capteur à diffusion (23) et un deuxième capteur à diffusion (24) indiquant un passage devant la borne,
- une deuxième cellule de détection, la deuxième cellule de détection ayant un premier capteur à réflexion (27) et un deuxième capteur à réflexion (28), coopérant avec un réflecteur positionné sur un engin de manutention de la palette indiquant la présence d'une palette à la borne (20).

2. Système selon la revendication 1, dans lequel pour le chargement l'unité de déclenchement de la prise de photo prend la photo si le premier capteur à diffusion (23) indique la présence d'un passage devant la borne (20) à l'unité de commande, puis le deuxième capteur à diffusion (24) indique un passage devant la borne (20) à l'unité de commande.

3. Système selon la revendication 1, dans lequel pour le déchargement l'unité de déclenchement de la prise de photo prend la photo si le deuxième capteur à diffusion (24) indique un passage devant la borne (20), puis le deuxième capteur à réflexion (28) indique la présence d'une palette, puis le premier capteur à diffusion (23) indique un passage devant la borne (20), puis le premier capteur à réflexion (27) indique la présence d'une palette.

4. Système selon la revendication 1, dans lequel il comporte un écran (25) d'information du système.

5. Système selon la revendication 1, dans lequel de chaque côté du point de passage des palettes se trouve une borne (20).

6. Système selon la revendication 1, dans lequel au-dessus du point de passage des palettes se trouve un premier capteur de profondeur adapté à mesurer la distance en hauteur de la palette entre le capteur et ladite palette.

7. Système selon la revendication 6, dans lequel de part et d'autre du point de passage des palettes se trouve un deuxième capteur de profondeur et un troisième capteur de profondeur, le deuxième capteur de profondeur et le troisième capteur de profondeur étant adaptés à mesurer la distance en longueur et largeur de la palette entre le capteur et ladite palette.
